# FASCICULE DE BREVET EUROPEEN

(11) **EP 2 143 264 B1**
(45) Date de publication et mention de la délivrance du brevet: **14.03.2018**
(21) Numéro de dépôt: 08749668.3
(22) Date de dépôt: 23.04.2008
(51) Int. Cl.: H04N 5/3745, H04N 5/353, H04N 5/33

(54) **DETECTEUR MATRICIEL D'IMPULSIONS LASER AVEC SOMMATION RAPIDE**
LASERIMPULSMATRIXDETEKTOR MIT SCHNELLER SUMMIERUNG
LASER-PULSE MATRIX DETECTOR WITH RAPID SUMMATION

(30) Priorité: 04.05.2007 FR 0703244
(43) Date de publication de la demande: 13.01.2010
(73) Titulaire: THALES, 92400 Courbevoie (FR)
(72) Inventeur: AUDIER, Marcel-Francis, F-75013 Paris (FR)
(74) Mandataire: Henriot, Marie-Pierre
(86) Numéro de dépôt international: PCT/EP2008/054922
(87) Numéro de publication internationale: WO 2008/135388

(56) Documents cités:
- EP-A- 1 515 541
- US-A- 5 856 667
- US-B1- 6 384 413
- BEDABRATA PAIN AND ERIC R, FOSSUM: "A Review of Infrared Readout Electronics for Space Science Sensors" SPIE, vol. 2020, 15 juin 1993 (1993-06-15), pages 1-47, XP002457338 cité dans la demande

## Description

Le domaine de l'invention est celui des détecteurs matriciels utilisés pour l'imagerie active et plus particulièrement celui des détecteurs matriciels d'impulsions à récurrence de détection élevée.

L'imagerie active met en oeuvre une source d'illumination laser qui éclaire la cible avec des impulsions généralement courtes et de faible récurrence. La cible réfléchit vers le détecteur une quantité de photons fortement réduite par l'absorption de l'atmosphère, la distance d'observation, le pouvoir réflecteur de la cible.

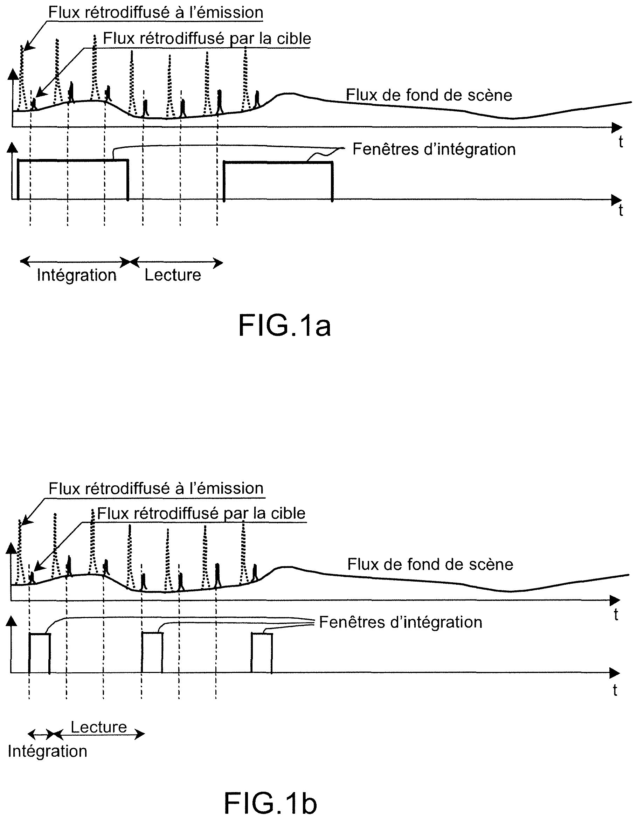

Une première solution pour détecter des trains d'impulsions à récurrence élevée consiste à utiliser une durée d'intégration longue pendant laquelle plusieurs impulsions successives sont intégrées avant d'être lues comme illustré figure 1a. Cette solution pénalise le contraste de l'image en intégrant, entre chaque arrivée d'impulsion ré-émise par la cible, le flux parasite rétrodiffusé à chaque émission ainsi que celui en provenance du fond de scène. En effet, le flux parasite atmosphérique peut atteindre environ 10⁸ ph/s/cm² alors que le signal reçu est de l'ordre de 10³ : le signal reçu est donc fortement bruité. En outre le flux parasite peut être rétro-diffusé par l'atmosphère proche mais également par l'optique du dispositif d'imagerie si celle-ci est commune à l'émetteur et au récepteur.

Pour ne pas enregistrer ce flux de photons parasite, une autre solution consiste à « optiquement obturer » le détecteur à chaque émission d'impulsion, l'obturation étant désactivée juste avant l'arrivée de l'impulsion rétro-diffusée par la cible, comme illustré figure 1b. Chaque impulsion est successivement intégrée puis lue.

On rappelle que chaque photodétecteur d'un détecteur matriciel comprend un transducteur tel qu'une photodiode qui convertit les photons reçus en électrons proportionnellement à l'éclairement reçu ; ces charges électriques sont ensuite intégrées par un intégrateur et proportionnellement converties en tension. Un circuit de lecture multiplexe les signaux de lecture issus de tous les intégrateurs et génère un signal vidéo de sortie contenant les informations de luminance du détecteur matriciel.

L'obturation du détecteur pendant l'émission d'une impulsion est actuellement réalisée soit par maintien sous reset de l'intégrateur associé à chaque photodiode, soit par dérivation du courant des photodiodes en amont de l'intégrateur. De préférence, la dérive du courant avant l'entrée de l'intégrateur est activée avant et juste après la détection de l'impulsion, la durée effective de l'intégration étant ainsi limitée à une tranche temporelle extrêmement courte qui permet une meilleure identification de la cible en éliminant l'information en provenance de l'arrière plan de la scène.

La conception des détecteurs matriciels IR est dirigé par l'application qui, jusque récemment, consistait à réaliser un détecteur capable d'imagerie passive dans une des bandes spectrales de transmission atmosphérique située au-delà de 1µm.

Selon le gabarit spectral exploité, l'amplitude du flux de scène à détecter, la sensibilité recherchée, la résolution spatiale du détecteur, la taille des pixels, la fréquence trame, .... , diverses architectures de détecteurs ont été développées et optimisées.

Les principales architectures répertoriées sont :
« SFD » pour Source Follower par diode,
« DI » pour circuit à injection directe,
« BDI » pour circuit à injection directe contre-réactionnée ou « bufferisée »,
« GMI » pour circuit à modulation de grille ou à miroir de courant,
« CTIA » pour amplificateur transimpédance bouclé par capacité d'intégration.

Les principales caractéristiques, performances et applications de ces architectures sont décrites dans l'article « A Review of Infrared Readout Electronics for Space Science Sensors » de Bedabrata Pain and Eric R, Fossum (SPIE Vol. 2020 Infrared Technology XIX July 15, 1993)

Le détecteur « SFD » souvent réalisé pour des applications d'astronomie, est très bien adapté à la réalisation de grandes matrices à très petit pas. Son niveau de bruit est faible à très basse température, mais il souffre d'une mauvaise linéarité et d'une faible dynamique instantanée.

Le détecteur « DI » est le plus communément réalisé. Parmi ses principaux inconvénients, on note :
- une forte dégradation de ses performances lors de la détection de très faibles flux en raison d'une augmentation rapide de l'impédance du transistor de liaison entre diode et capacité d'intégration,
- une faible bande passante incompatible de la détection d'impulsions de faibles amplitudes et de récurrences élevées.

Le détecteur « BDI » dont l'architecture est similaire à celle du détecteur « DI » à injection directe avec un ampli-op inverseur entre photodiode et transistor d'injection, présente un risque d'instabilité (entrée en oscillation) lors de la détection d'impulsions lumineuses brèves et de grandes amplitudes.

Les détecteurs « GMI » permettent la détection de très faibles flux et présentent des niveaux de bruit en entrée extrêmement faibles, ce qui a entraîné son exploitation pour la détection en bande 1 (InGaAs à 1.7µm). Un second avantage réside dans la capacité d'ajuster le gain de conversion en temps réel et de l'adapter de manière simple aux niveaux de flux détecté. Les inconvénients majeurs du détecteur « GMI » sont :
- une assez forte non-linéarité et surtout une forte dispersion en gain et en offsets entre photosite (pixel),
- une croissance rapide de l'encombrement du photosite pour des bandes passantes élevées et de faibles niveaux de bruit.

Le détecteur « CTIA » est un amplificateur inverseur avec une capacité d'intégration utilisée en boucle de contre-réaction. Les niveaux de bruit, la linéarité et les bandes passantes atteintes sont parmi les plus performantes et en font un détecteur bien adapté à la détection de très faibles flux (<10⁶ ph/s/cm²), et à la détection de mono-impulsions laser brèves.

Pendant la phase d'intégration, les charges fournies par la photodiode sont stockées sur le noeud d'entrée de l'amplificateur et c'est une copie précise du montant de cette charge qui est recopiée sur la capacité d'intégration. La charge intégrée est conservée jusqu'à l'évacuation de celle présente à l'entrée de l'amplificateur. Celle-ci est normalement supprimée par court-circuit de la capacité d'intégration (reset) mais est également lentement évacuée par la résistance de fuite de la photodiode, fixant ainsi une fréquence de coupure basse.

Dans un mode de détection d'impulsions isolées récurrentes avec, entre chaque impulsion les opérations d'obturation rapide et de reset de la photodiode (pour assurer une protection contre la rétro diffusion et une trop forte intégration du signal de fond), la charge accumulée en entrée de l'amplificateur, suite à la détection d'une précédente impulsion, est partiellement évacuée lors de la reconnexion de la photodiode en raison du gain fini de l'ampli de l'intégrateur. Il en résulte une difficulté importante pour réaliser une fonction de post-intégration linéaire.

A la fin des années 90, l'intérêt émergent pour l'imagerie passive à très bas niveau de lumière, en particulier dans la première bande spectrale de l'infrarouge, et pour l'imagerie active a conduit au développement de détecteurs matriciels capables de détecter de très faibles courants et des impulsions courtes de très faibles amplitudes. Un tel détecteur, parmi les premiers, est décrit dans l'article « Very Wide Dynamic Range SWIR Sensors for Very Low Background Applications » de Robert F. Cannata and al (Indigo Systems Corporation). Il s'agit d'un détecteur de type CTIA à double gain et très fort coefficient d'amplification.

EP 1 515 541 décrit un détecteur d'impulsions lumineuses dans lequel un photodétecteur est successivement connecté à un intégrateur puis à une tension de référence pendant une période d'intégration.

US 6 384 413 décrit un pixel dont l'architecture est du type BDI. Mais tous ces détecteurs souffrent de plusieurs inconvénients. En effet :
- Chaque illumination et acquisition doit être espacée de plusieurs millisecondes, nécessaires à la lecture du détecteur puis à sa ré-initialisation ; un tel détecteur est ainsi limité à une cadence d'environ 10 Hz, voire à une perte d'information entre 2 impulsions.
- De tels détecteurs fonctionnent avec une post-intégration classique c'est-à-dire hors plan focal, avec une lecture pour chaque impulsion ce qui augmente le bruit de lecture lors de cette phase de post-intégration.

Le but de l'invention est d'obtenir un détecteur d'impulsions à cadence élevée présentant un rapport signal/bruit élevé.

Plus précisément l'invention a pour objet un détecteur d'impulsions lumineuses à injection directe contre-réactionnée qui comporte une matrice de photodétecteurs, chaque photodétecteur comprenant un transducteur et un intégrateur comportant un transistor d'injection MOSFET monté en grille commune, un amplificateur de contre-réaction, une capacité d'intégration. L'amplificateur de contre-réaction est un amplificateur différentiel inverseur cascodé dont l'entrée négative est connectée à l'entrée du transistor d'injection et dont la sortie est connectée à la grille de ce transistor. Il est principalement caractérisé en ce qu'il comprend pour chaque photodétecteur un circuit de démultiplexage intercalé entre le transducteur et l'intégrateur, apte à connecter successivement le transducteur sur l'entrée du transistor d'injection puis sur une tension de référence à laquelle est également connectée l'entrée positive de l'amplificateur différentiel. Selon une caractéristique de l'invention, le circuit de démultiplexage comprend deux transistors Φ̅*̅*̅_̅{̅g̅a̅t̅i̅n̅g̅}̅*̅*̅ et Φ**_{gating}** commandés en opposition de phase en vue d'assurer une obturation rapide du photo détecteur.

La fermeture du premier transistor ou commutateur connecte le transducteur à une tension de référence (Vref) appliquée à l'entrée de l'amplificateur inverseur, via la faible résistance du commutateur ; l'ouverture du second transistor ou commutateur isole le photo détecteur de son intégrateur. La reconnexion de l'intégrateur au photo détecteur est obtenue par ouverture du premier commutateur et fermeture simultanée du deuxième commutateur.

De préférence, le détecteur comprend une capacité de contre-réaction C_{BL} placée en parallèle de l'amplificateur différentiel, apte à optimiser la bande passante de cet amplificateur.

Il comprend avantageusement un transistor écran Mécr placé entre la sortie du transistor d'injection Minj et la capacité d'intégration Cint.

Eventuellement, il comprend en outre un circuit de mémorisation relié à l'intégrateur.

Les impulsions lumineuses sont par exemple des impulsions IR qui ont une cadence supérieure à quelques centaines de Hz.

L'invention concerne également un procédé de détection d'impulsions lumineuses au moyen d'une matrice de photo détecteurs, qui comprend pour chaque photo détecteur des étapes d'intégration de charges au moyen d'un intégrateur puis de lecture de ces charges, caractérisé en ce que l'étape d'intégration comprend :
- une étape d'ouverture de l'intégrateur pendant la réception de chaque impulsion puis d'obturation de l'intégrateur entre deux réceptions par le circuit de multiplexage,
- de sommation des charges intégrées par l'intégrateur sur plusieurs impulsions,
et en ce que l'étape de lecture comprend une lecture de la somme des charges intégrées sur plusieurs impulsions.

L'ouverture de l'intégrateur est avantageusement obtenue par deux commutateurs fonctionnant en opposition de phase.

Chaque photo détecteur comportant un transducteur, l'obturation de l'intégrateur est obtenue par fermeture d'un premier commutateur et ouverture simultanée du deuxième commutateur. La fermeture du premier commutateur connecte le transducteur à une tension de référence (Vref) via la faible résistance du commutateur, et l'ouverture du second commutateur isole le photo détecteur de son l'intégrateur. La reconnexion de l'intégrateur au photo détecteur est obtenue par ouverture du premier commutateur et fermeture simultanée du deuxième commutateur.

D'autres caractéristiques et avantages de l'invention apparaîtront à la lecture de la description détaillée qui suit, faite à titre d'exemple non limitatif et en référence aux dessins annexés dans lesquels :
les figures 1a et 1b déjà décrites illustrent schématiquement le fonctionnement de deux détecteurs selon l'état de la technique, le premier (fig 1a) ayant une durée d'intégration pendant laquelle plusieurs impulsions sont intégrées avant d'être lues, le second (fig 1b) ayant une durée d'intégration limitée à celle de l'impulsion rétro-réfléchie, chaque intégration étant suivie d'une lecture,
la figure 2 illustre schématiquement le fonctionnement d'un détecteur selon l'invention,
la figure 3 représente schématiquement les principaux éléments d'un exemple de détecteur « BDI » selon l'état de la technique,
la figure 4 représente schématiquement les principaux éléments d'un exemple de détecteur selon l'invention.

D'une figure à l'autre, les mêmes éléments sont repérés par les mêmes références.

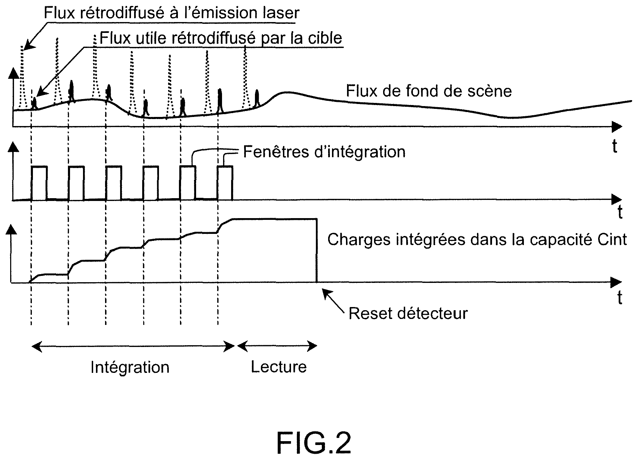

Le détecteur selon l'invention est un détecteur à obturateur rapide apte à détecter de courtes impulsions à haute cadence et de les sommer (post-intégrer) avant de les lire, comme illustré figure 2. Sont tout d'abord représentés sur cette figure en fonction du temps, le flux utile correspondant aux impulsions rétro-réfléchies par la cible et le flux parasite provenant du fond de scène et celui résultant de la rétro diffusion atmosphérique à l'émission (et/ou éventuellement de l'optique du dispositif). Dessous sont indiquées la succession des fenêtres d'intégration, l'intégration étant désactivée lorsque le photo détecteur est optiquement obturé c'est-à-dire entre deux impulsions rétro réfléchies par la cible ; le flux rétro diffusé à l'émission est ainsi éliminé. Au fur et à mesure que ces fenêtres d'intégration se succèdent, les charges intégrées par la capacité d'intégration du photo détecteur (représentées dessous) s'accumulent pour être lue en une fois après réception de plusieurs impulsions.

Les impulsions sont des impulsions laser et plus généralement des impulsions lumineuses.

Le détecteur selon l'invention est basé sur la configuration d'un détecteur de type BDI, c'est-à-dire à injection directe contre-réactionnée.

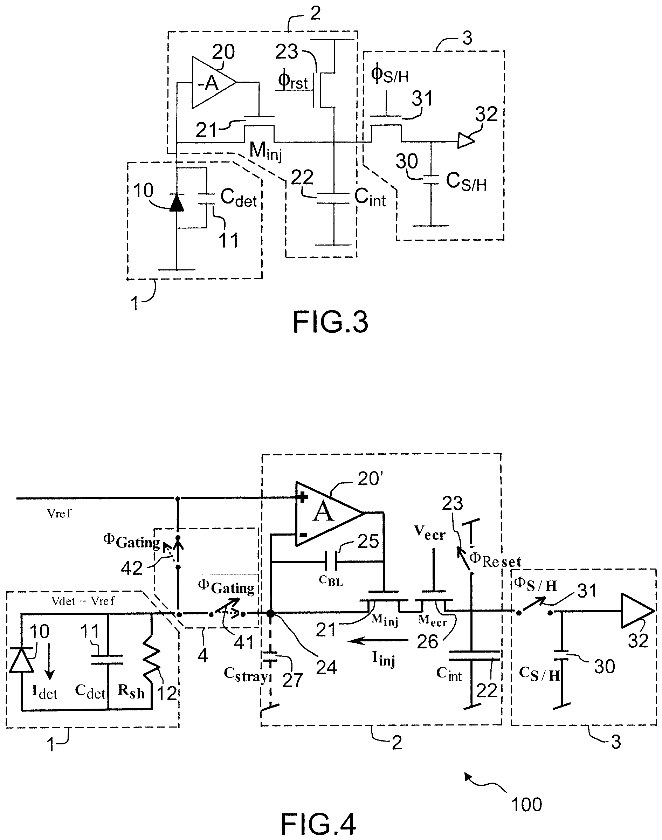

Un détecteur de type BDI décrit en relation avec la figure 3, comprend :
- un transducteur 1 tel qu'une photodiode 10 avec en parallèle une capacité de détection 11,
- un intégrateur 2 qui comprend
   ∘ un transistor 21 MOSFET (Minj) monté en grille commune et utilisé comme transistor d'injection,
   ∘ un amplificateur-op inverseur 20 entre le transducteur 1 et le transistor d'injection 21, ayant une fonction de contre-réaction permettant de réduire l'impédance du transistor d'injection proportionnellement au gain de l'ampli et en conséquence d'augmenter dans les mêmes proportions la bande passante de l'injection,
   ∘ une capacité d'intégration 22 et son transistor de remise à zéro 23.

Ce détecteur comprend avantageusement un circuit de mémorisation 3 incluant une capacité de mémorisation « Sample and Hold » 30, un transistor associé 31 et un amplificateur 32.

Selon l'invention le détecteur 100 comprend en outre les éléments suivants que l'on voit figure 4 :
- Un démultiplexeur 4 connectant successivement le transducteur 1 sur une tension de référence (Vref) puis sur l'entrée du transistor d'injection (Minj). Ce démultiplexeur comprend des transistors Φ̅_{*̅*̅g̅a̅t̅i̅n̅g̅*̅*̅} 41 et Φ**_{gating}** 42 qui sont commandés en parfaite opposition de phase afin de minimiser l'injection de charges liée à la fermeture du transistor 41 Φ**_{gating}** et son impact sur la modulation de potentiel du noeud d'entrée 24 de l'intégrateur 4.
- Un ampli différentiel inverseur cascodé (A) 20', de grands gain et bande passante, placé dans une boucle de contre réaction entre l'entrée du transistor d'injection 21 et la grille de ce transistor. Cet amplificateur stabilise le potentiel d'entrée du transistor d'injection 21 et en augmente la bande passante. La bande passante de l'ampli est de préférence ajustée par une capacité 25 de contre réaction CBL, pour éviter les oscillations du circuit lors de la détection d'impulsions rapides de grandes amplitudes. Son optimisation est faite en fonction des caractéristiques des impulsions à détecter (amplitude, durée et récurrence).

De préférence, l'intégrateur 2 comprend en outre un transistor écran 26 (Mecr) placé entre la sortie du transistor d'injection 21 (Minj) et la capacité d'intégration 22 (Cint), qui réalise un montage cascode permettant de minimiser la modulation du potentiel du drain du transistor d'injection en fonction de la charge intégrée, augmentant ainsi le découplage entre la capacité d'intégration 22 et l'entrée 24 de l'intégrateur. Avantageusement, ce transistor 26 fonctionne en saturation ce qui limite la décharge maximale du potentiel de la capacité d'intégration 22 à Vecr-Vth-5.ΦT (Vecr= potentiel constant de la grille du transistor écran, Vth= tension de seuil du transistor écran et ΦT=potentiel thermique).

Le transducteur 1 comprend une résistance de fuite (résistance shunt) 12 dont la valeur limite le temps maximal alloué à la détection (constante de temps : (Cdet+Cstray)Rsh) . On a indiqué sur la figure une capacité Cstray 27 pour matérialiser une capacité parasite de l'intégrateur.

Cette architecture permet :
- un transfert rapide des photo-électrons générés par le transducteur 1 vers le noeud d'intégration 22 (capacité),
- un isolement quasi parfait entre noeud d'intégration 22 et transducteur 1,
- une fixation précise des potentiels du transducteur 1 et de l'entrée 24 de l'intégrateur à une valeur constante lors des phases d'obturation et d'intégration,
- la possibilité d'utilisation de grandes capacités d'intégration autorisant la sommation d'un grand nombre d'impulsions.

On obtient ainsi un détecteur matriciel apte à détecter des impulsions lumineuses émises à une cadence élevée pouvant dépasser plusieurs dizaines de kHz.

Le détecteur selon l'invention fonctionne de la manière suivante.

En phase d'émission laser, le transistor ou commutateur 42 Φ**_{gating}** est fermé et connecte le transducteur 1 à la tension Vref appliquée à l'entrée de l'amplificateur 20' via une très faible résistance Rgating typiquement inférieure à quelques centaines d'Ω. La très faible constante de temps Cdet.Rgating permet une évacuation rapide du courant généré par la photodiode en réponse à la rétrodiffusion parasite au moment de l'émission.

Précédant le retour de l'impulsion laser rétro diffusée par la cible, le transistor ou commutateur 42 Φ**_{gating}** est ouvert, déconnectant la photodiode de la tension de référence Vref. Simultanément, le transistor ou commutateur 41 Φ̅_{*̅*̅g̅a̅t̅i̅n̅g̅*̅*̅} est fermé et connecte la photodiode sur l'entrée de l'intégrateur 2.

L'amplificateur 20' différentiel de contre réaction « A » de grand gain (typiquement supérieur à 60 dB) maintient avec précision le potentiel Vref sur le transducteur 1 et l'entrée 24 de l'intégrateur.

A réception du retour de l'impulsion laser rétro diffusée par la cible, le courant généré par le transducteur 1 traverse le transistor d'injection 21 et est intégré dans la capacité Cint 22 avec une constante de temps Cdet/((A+1).Gm), A étant le gain de l'amplificateur, Gm la transductance du transistor d'injection.

En régime de faible injection, Gm est indépendant de la taille du transistor 21 et varie proportionnellement au courant linj injecté (Gm≈ (q.linj)/(KT)) (q=charge de l'électron, K=constante de Boltzmann, T=température du composant). Ainsi, à titre d'illustration, une impulsion de courant de 1000 photoélectrons en 100ns délivrée par un détecteur de 200fF de capacité fonctionnant à 77K couplée à un intégrateur BDI dont l'ampli a un gain 60dB, sera transférée sur la capacité d'intégration avec une constante de temps initiale de 2ns (hors limitation par la bande passante finie de l'ampli).

En fin de transfert, le transistor ou commutateur 41 Φ̅_{*̅*̅g̅a̅t̅i̅n̅g̅*̅*̅} est à nouveau ouvert et le transistor ou commutateur 42 Φ**_{gating}** fermé reconnectant ainsi le transducteur 1 à la source basse impédance de tension de référence, en attente d'une nouvelle phase d'émission.

Plusieurs impulsions sont ainsi transférées et sommées dans la capacité d'intégration Cint 22 au cours d'une même période de trame. Le résultat de la sommation est ensuite lu en quelques milli-secondes.

Le détecteur selon l'invention a ainsi comme avantages :
- de ne plus être limité en cadence de détection en raison notamment de la cadence limitée du circuit de lecture ni de réduire la perte d'informations entre 2 impulsions et pouvoir ainsi fonctionner à une cadence d'environ 20 kHz,
- de diminuer la dégradation du rapport signal sur bruit apporté par le bruit additionnel de chaque lecture, puisqu'on a une seule lecture pour plusieurs impulsions détectées puis sommées dans l'intégrateur, grâce à la post-intégration au sein même du détecteur préalablement à sa lecture et non hors plan focal.

## Revendications

1. Détecteur (100) d'impulsions lumineuses à injection directe contre-réactionnée qui comporte une matrice de photodétecteurs, chaque photodétecteur comprenant un transducteur (1) et un intégrateur (2) comportant un transistor d'injection (21) MOSFET monté en grille commune, un amplificateur de contre-réaction, une capacité d'intégration (22), l'amplificateur de contre-réaction est un amplificateur (20') différentiel inverseur cascodé dont l'entrée négative est connectée à l'entrée du transistor d'injection (21) et dont la sortie est connectée à la grille de ce transistor, **caractérisé en ce qu'**il comprend pour chaque photodétecteur un circuit de démultiplexage (4) intercalé entre le transducteur (1) et l'intégrateur (2), apte à connecter successivement le transducteur (1) sur l'entrée du transistor d'injection (21) puis sur une tension de référence (Vref) à laquelle est également connectée l'entrée positive de l'amplificateur différentiel (20').

2. Détecteur (100) matriciel selon la revendication précédente, **caractérisé en ce que** le circuit de démultiplexage (4) comprend deux transistors Φ̅_{*̅*̅g̅a̅t̅i̅n̅g̅*̅*̅} (41) et Φ**_{gating}** (42) commandés en opposition de phase en vue d'assurer une obturation rapide du photodétecteur.

3. Détecteur (100) matriciel selon l'une des revendications précédentes, **caractérisé en ce qu'**il comprend une capacité de contre-réaction C_{BL} (25) placée en parallèle de l'amplificateur différentiel (20'), apte à optimiser la bande passante de cet amplificateur.

4. Détecteur (100) matriciel selon l'une des revendications précédentes, **caractérisé en ce qu'**il comprend un transistor écran Mécr (26) placé entre la sortie du transistor d'injection (21) et la capacité d'intégration (22).

5. Détecteur (100) matriciel selon l'une des revendications précédentes, **caractérisé en ce que** le transducteur (1) comprend une photodiode (10).

6. Détecteur (100) matriciel selon l'une des revendications précédentes, **caractérisé en ce qu'**il comprend en outre un circuit de mémorisation (3) relié à l'intégrateur (2).

7. Détecteur (100) matriciel selon l'une des revendications précédentes, **caractérisé en ce que** les impulsions lumineuses sont des impulsions IR.

8. Détecteur (100) matriciel selon l'une des revendications précédentes, **caractérisé en ce que** les impulsions lumineuses ont une cadence supérieure à quelques centaines de Hertz.

9. Procédé de détection d'impulsions lumineuses au moyen d'un détecteur selon l'une des revendications précédentes, qui comprend pour chaque photo détecteur des étapes d'intégration de charges au moyen d'un intégrateur puis de lecture de ces charges, **caractérisé en ce que** l'étape d'intégration comprend :
a. une étape d'ouverture de l'intégrateur pendant la réception de chaque impulsion puis d'obturation de l'intégrateur entre deux réceptions par le circuit de démultiplexage (4),
b. de sommation des charges intégrées par l'intégrateur (2) sur plusieurs impulsions,
et **en ce que** l'étape de lecture comprend une lecture de la somme des charges intégrées sur plusieurs impulsions.

10. Procédé de détection d'impulsions lumineuses selon la revendication précédente, **caractérisé en ce que** l'ouverture de l'intégrateur est obtenue par deux commutateurs fonctionnant en opposition de phase.

11. Procédé de détection d'impulsions lumineuses selon la revendication précédente, **caractérisé en ce que** chaque photodétecteur comportant un transducteur, l'obturation de l'intégrateur est obtenue par fermeture d'un premier commutateur et ouverture simultanée du deuxième commutateur.

12. Procédé de détection d'impulsions laser selon l'une des revendications 9 à 11, **caractérisé en ce que** les impulsions lumineuses sont des impulsions IR.

13. Procédé de détection d'impulsions laser selon l'une des revendications 9 à 12, **caractérisé en ce que** les impulsions lumineuses ont une cadence supérieure à quelques centaines de Hertz.

## Patentansprüche

1. Lichtimpulsdetektor (100) mit direkter Gegenreaktionsinjektion, der eine Fotodetektormatrix umfasst, wobei jeder Fotodetektor einen Wandler (1) und einen Integrator (2) umfasst, der einen MOSFET-Injektionstransistor (21) mit gemeinsamem Gateanschluss, einen Gegenreaktionsverstärker, eine Integrationskapazität (22) umfasst, wobei der Gegenreaktionsverstärker ein kaskodengeschalteter Wendedifferenzialverstärker (20') ist, dessen negativer Eingang mit dem Eingang des Injektionstransistors (21) verbunden ist und dessen Ausgang mit dem Gate dieses Transistors verbunden ist, **dadurch gekennzeichnet, dass** er für jeden Fotodetektor eine Demultiplexerschaltung (4) umfasst, die zwischen dem Wandler (1) und dem Integrator (2) geschaltet ist, zum sukzessiven Verbinden des Wandlers (1) mit dem Eingang des Injektionstransistors (21), dann mit einer Referenzspannung (Vref), mit der auch der positive Eingang des Differenzialverstärkers (20') verbunden ist.

2. Matrixdetektor (100) nach dem vorherigen Anspruch, **dadurch gekennzeichnet, dass** die Demultiplexerschaltung (4) zwei Transistoren Φ̅_{*̅*̅g̅a̅t̅i̅n̅g̅*̅*̅} (41) und Φ**_{gating}** (42) umfasst, gegenphasig gesteuert, um ein schnelles Verschließen des Fotodetektors zu gewährleisten.

3. Matrixdetektor (100) nach einem der vorherigen Ansprüche, **dadurch gekennzeichnet, dass** er eine Gegenreaktionskapazität C_{BL} (25) umfasst, die parallel zum Differenzialverstärker (20') platziert ist, zum Optimieren des Passbandes dieses Verstärkers.

4. Matrixdetektor (100) nach einem der vorherigen Ansprüche, **dadurch gekennzeichnet, dass** er einen Bildschirmtransistor Mécr (26) umfasst, platziert zwischen dem Ausgang des Injektionstransistors (21) und der Integrationskapazität (22).

5. Matrixdetektor (100) nach einem der vorherigen Ansprüche, **dadurch gekennzeichnet, dass** der Wandler (1) eine Fotodiode (10) umfasst.

6. Matrixdetektor (100) nach einem der vorherigen Ansprüche, **dadurch gekennzeichnet, dass** er ferner eine mit dem Integrator (2) verbundene Speicherschaltung (3) umfasst.

7. Matrixdetektor (100) nach einem der vorherigen Ansprüche, **dadurch gekennzeichnet, dass** die Lichtimpulse IR-Impulse sind.

8. Matrixdetektor (100) nach einem der vorherigen Ansprüche, **dadurch gekennzeichnet, dass** die Lichtimpulse einen Takt von mehr als mehrere hundert Hertz haben.

9. Verfahren zum Erkennen von Lichtimpulsen mittels eines Detektors nach einem der vorherigen Ansprüche, das für jeden Fotodetektor Schritte des Integrierens von Ladungen mittels eines Integrators, dann des Lesens dieser Ladungen beinhaltet, **dadurch gekennzeichnet, dass** der Integrationsschritt Folgendes beinhaltet:
a) einen Schritt des Öffnens des Integrators während des Empfangs jedes Impulses, dann des Verschließens des Integrators zwischen zwei Empfängen durch die Demultiplexerschaltung (4),
b) des Summierens von durch den Integrator (2) integrierten Ladungen auf mehrere Impulse,
und dadurch, dass der Schritt des Lesens das Lesen der Summe der über mehrere Impulse integrierten Ladungen beinhaltet.

10. Verfahren zum Erkennen von Lichtimpulsen nach dem vorherigen Anspruch, **dadurch gekennzeichnet, dass** das Öffnen des Integrators durch zwei Schalter erzielt wird, die gegenphasig arbeiten.

11. Verfahren zum Erkennen von Lichtimpulsen nach dem vorherigen Anspruch, **dadurch gekennzeichnet, dass** dadurch, dass jeder Fotodetektor einen Wandler umfasst, das Verschließen des Integrators durch Schließen eines ersten Schalters und gleichzeitiges Öffnen des zweiten Schalters erzielt wird.

12. Verfahren zum Erkennen von Laserimpulsen nach einem der Ansprüche 9 bis 11, **dadurch gekennzeichnet, dass** die Lichtimpulse IR-Impulse sind.

13. Verfahren zum Erkennen von Laserimpulsen nach einem der Ansprüche 9 bis 12, **dadurch gekennzeichnet, dass** die Lichtimpulse einen Takt von mehr als mehrere hundert Hertz haben.

## Claims

1. A light pulse detector (100) with direct injection fed back which comprises a matrix of photodetectors, each photodetector comprising a transducer (1) and an integrator (2) comprising a MOSFET injection transistor (21) mounted as a common gate, a feedback amplifier, an integration capacitor (22), the feedback amplifier being a cascode inverting differential amplifier (20') of which the negative input is connected to the input of the injection transistor (21) and of which the output is connected to the gate of this transistor, **characterised in that** it comprises, for each photodetector, a demultiplexing circuit (4) inserted between the transducer (1) and the integrator (2), capable of connecting successively the transducer (1) on the input of the injection transistor (21) then on a reference voltage (Vref) to which is also connected the positive input of the differential amplifier (20').

2. The matrix detector (100) according to the preceding claim, **characterised in that** the demultiplexing circuit (4) comprises two transistors Φ̅*̅*̅_̅{̅g̅a̅t̅i̅n̅g̅}̅*̅*̅ (41) and Φ**_{gating}** (42) controlled in phase opposition for the purpose of ensuring a rapid shut-off of the photodetector.

3. The matrix detector (100) according to either of the preceding claims, **characterised in that** it comprises a feedback capacitor C_{BL} (25) placed in parallel with the differential amplifier (20'), capable of optimising the bandwidth of this amplifier.

4. The matrix detector (100) according to any of the preceding claims, **characterised in that** it comprises a screen transistor Mécr (26) placed between the output of the injection transistor (21) and the integration capacitor (22).

5. The matrix detector (100) according to any of the preceding claims, **characterised in that** the transducer (1) comprises a photodiode (10).

6. The matrix detector (100) according to any of the preceding claims, **characterised in that** it further comprises a storage circuit (3) connected to the integrator (2).

7. The matrix detector (100) according to any of the preceding claims, **characterised in that** the light pulses are IR pulses.

8. The matrix detector (100) according to any of the preceding claims, **characterised in that** the light pulses have a rate higher than a few hundred Hertz.

9. A method for detecting light pulses by means of a detector according to any of the preceding claims, which comprises, for each photodetector, steps of integrating loads by means of an integrator then of reading these loads, **characterised in that** the integration step comprises:
a. a step of opening the integrator during the receipt of each pulse then shutting off the integrator between two receptions via the demultiplexing circuit (4),
b. of summating the loads integrated by the integrator (2) over several pulses, and **in that** the reading step comprises reading the sum of the loads integrated over several pulses.

10. The method for detecting light pulses according to the preceding claim, **characterised in that** the opening of the integrator is obtained by two switches operating in phase opposition.

11. The method for detecting light pulses according to the preceding claim, **characterised in that**, since each photodetector comprises a transducer, the shutting off of the integrator is obtained by closing a first switch and simultaneous opening of the second switch.

12. The method for detecting laser pulses according to any of Claims 9 to 11, **characterised in that** the light pulses are IR pulses.

13. The method for detecting laser pulses according to any of Claims 9 to 12, **characterised in that** the light pulses have a rate that is higher than a few hundred Hertz.
